# EUROPEAN PATENT SPECIFICATION

(11) **EP 1 939 509 B1**
(45) Date of publication and mention of the grant of the patent: **12.10.2011**
(21) Application number: 07024551.9
(22) Date of filing: 18.12.2007
(51) Int. Cl.: F16L 11/04, F16L 11/11, B32B 1/08, B32B 27/32, B29C 49/00

(54) **Fuel hose for resin fuel tank and method of producing the same**
Brennstoffschlauch für einen Harzbrennstofftank und Herstellungsverfahren dafür
Tuyau de combustible pour réservoir de combustible en résine et son procédé de fabrication

(30) Priority: 28.12.2006 JP 2006354790
(43) Date of publication of application: 02.07.2008
(73) Proprietor: TOKAI RUBBER INDUSTRIES, LTD., Komaki-shi, Aichi-ken, 485-8550 (JP)
(72) Inventor: Katayama, Kazutaka, Komaki-shi Aichi-ken 485-8550 (JP)
(74) Representative: Kuhnen & Wacker

(56) References cited:
- WO-A-88/05377
- GB-A- 2 335 389
- US-A- 3 399 427
- US-A- 3 919 367
- US-A- 5 618 599
- US-A1- 2004 074 552
- US-A1- 2006 088 374
- DATABASE WPI Week 200382 Thomson Scientific, London, GB; AN 2003-882696 XP002522224 & JP 2003 194280 A (TOYODA GOSEI KK) 9 July 2003 (2003-07-09)
- DATABASE WPI Week 200274 Thomson Scientific, London, GB; AN 2002-687243 XP002522225 & JP 2002 241546 A (TORAY IND INC) 28 August 2002 (2002-08-28)

## Description

### BACKGROUND OF THE INVENTION

### Field of the Invention

The present invention relates to a fuel hose for connection to a resin fuel tank, and a method of producing the same.

### Description of the Related Art

A joint for connection of a fuel hose is welded to an outer peripheral portion of a mouth of an automotive fuel tank made of a resin, as disclosed, for example, in Japanese Patent Application Laid-Open No.2006-143171.

Since the fuel hose and the joint are discrete parts, there are a large number of parts required for connection between the resin fuel tank and the fuel hose, and a structure for the connection is complicated. This gives rise to an increase in parts control costs and production costs. The increase in the number of parts leads to an increase in the number of connecting portions, resulting in an accordingly increased apprehension about the penetration of fuel through the connecting portions.

US 5 618 599 discloses coextruded three-layered moulded structure having a central barrier layer made of a EVOH/compatibilizer blend, between two layers of HDPE. The compatibilizer has a polyolefin backbone with functional polymer grafts and may be a modified polypropylene or polyethylene, with functional graft of polycaprolactone or polyvinylacrylate.

JP2003194280 discloses a multilayer fuel tube for a resin fuel tank. The tube comprises a barrier layer made of EVOH and a protective outer layer made of HDPE. One of the end section of the fuel tube has an increased diameter and an increased wall thickness, and can be directly welded to the polyethylene layer on the surface of the outer periphery of the resin fuel tank. The tube is produced on conventional extrusion shaping/corrugating process and the increased wall thickness of the end section may be obtained by controlling the flow rate of the resin from the extruder.

### SUMMARY OF THE INVENTION

It is therefore an object of the present invention to provide a fuel hose for a resin fuel tank which is directly weldable to the resin fuel tank without the use of a joint therebetween, and a method of producing the same.

According to a first aspect of the present invention, a fuel hose for a resin fuel tank comprises: a barrier layer of a generally cylindrical configuration, the barrier layer being made of an alloy material consisting primarily of ethylene vinyl alcohol copolymer and high density polyethylene modified with at least one or more than one functional group selected from the group consisting of a maleic anhydride residue, a maleic acid group, an acrylic acid group, a methacrylic acid group, an acrylic acid ester group, a methacrylic acid ester group, a vinyl acetate group and an amino group, the modified high density polyethylene being mixed with the ethylene vinyl alcohol copolymer in a ratio of 150 to 900 parts by volume of the modified high density polyethylene to 100 parts by volume of the ethylene vinyl alcohol copolymer; a first welding layer of a generally cylindrical configuration formed on an inner peripheral surface of the barrier layer; and a second welding layer of a generally cylindrical configuration formed on an outer peripheral surface of the barrier layer, the first and second welding layers being made of high density polyethylene, the barrier layer, the first welding layer and the second welding layer constituting a triple layer structure of a generally cylindrical configuration, the triple layer structure having an opening portion at one end thereof, the opening portion being configured in the form of an increased diameter portion and also in the form of a thick-walled portion, the opening portion being formed as a portion for welding to a polyethylene layer on the surface of an outer periphery of an opening of the resin fuel tank.

According to a second aspect of the present invention, a method of producing a fuel hose for a resin fuel tank comprises the steps of: while circulating an upper die set including a plurality of upper dies coupled to each other in the form of an endless loop and a lower die set including a plurality of lower dies coupled to each other in the form of an endless loop, sequentially bringing the upper and lower dies in pairs together to form a generally cylindrical molding space; extruding a hose base body of a generally cylindrical configuration made of a material for production of the fuel hose from an extruder into the molding space to bring the hose base body into intimate contact with a die surface facing the molding space, thereby making the hose base body in the form of a continuous hose; and sequentially separating the upper and lower dies in pairs from each other to remove the continuous hose from the upper and lower dies, the die surface facing the molding space defined by a predetermined pair of upper and lower dies in the upper and lower die sets being formed with an increased diameter portion, the hose base body having a triple layer structure including a barrier layer base material of a generally cylindrical configuration, a first welding layer base material of a generally cylindrical configuration formed' on an inner peripheral surface of the barrier layer base material, and a second welding layer base material of a generally cylindrical configuration formed on an outer peripheral surface of the barrier layer base material, the barrier layer base material being made of an alloy material consisting primarily of ethylene vinyl alcohol copolymer and high density polyethylene modified with at least one or more than one functional group selected from the group consisting of a maleic anhydride residue, a maleic acid group, an acrylic acid group, a methacrylic acid group, an acrylic acid ester group, a methacrylic acid ester group, a vinyl acetate group and an amino group, the modified high density polyethylene being mixed with the ethylene vinyl alcohol copolymer in a ratio of 150 to 900 parts by volume of the modified high density polyethylene to 100 parts by volume of the ethylene vinyl alcohol copolymer, the first and second welding layer base materials being made of high density polyethylene, the upper die set and the lower die set being adapted to circulate at a reduced speed when the hose base body is extruded from the extruder to the increased diameter portion of the die surface, to thereby configure the hose base body at a portion extruded into the increased diameter portion in the form of an increased diameter portion and in the form of a thick-walled portion, the method further comprising the step of cutting the increased diameter portion of the continuous hose in a circumferential direction after the continuous hose is removed.

The fuel hose for the resin fuel tank according to the present invention has the triple layer structure including the barrier layer of the generally cylindrical configuration made of the alloy material consisting primarily of ethylene vinyl alcohol copolymer and high density polyethylene modified with at least one or more than one functional group selected from the group consisting of a maleic anhydride residue, a maleic acid group, an acrylic acid group, a methacrylic acid group, an acrylic acid ester group, a methacrylic acid ester group, a vinyl acetate group and an amino group, the modified high density polyethylene being mixed with the ethylene vinyl alcohol copolymer in a ratio of 150 to 900 parts by volume of the modified high density polyethylene to 100 parts by volume of the ethylene vinyl alcohol copolymer, the first welding layer of the generally cylindrical configuration formed on the inner peripheral surface of the barrier layer, and the second welding layer of the generally cylindrical configuration formed on the outer peripheral surface of the barrier layer, the first and second welding layers being made of high density polyethylene. Thus, the barrier layer made of the alloy material consisting primarily of ethylene vinyl alcohol copolymer and modified high density polyethylene has excellent fuel barrier properties, and the welding layers made of high density polyethylene have excellent welding strength to the polyethylene layer on the surface of the resin fuel tank. Additionally, the barrier layer and the welding layers have increased adhesion therebetween. This avoids the removal of the layers from each other at each interface, and also avoids leakage of fuel at each interface. Further, the portion for welding to the resin fuel tank is in the form of the increased diameter portion and also in the form of the thick-walled portion. This makes the barrier layer thick-walled to improve fuel barrier properties, and also increases the welding area of the welding layers and the resin fuel tank to improve the welding strength of the fuel hose to the resin fuel tank.

The fuel hose for the resin fuel tank according to the present invention has the portion for welding to the resin fuel tank which has the triple layer structure including the barrier layer of the generally cylindrical configuration made of the alloy material consisting primarily of ethylene vinyl alcohol copolymer and high density polyethylene modified with at least one or more than one functional group selected from the group consisting of a maleic anhydride residue, a maleic acid group, an acrylic acid group, a methacrylic acid group, an acrylic acid ester group, a methacrylic acid ester group, a vinyl acetate group and an amino group, the modified high density polyethylene being mixed with the ethylene vinyl alcohol copolymer in a ratio of 150 to 900 parts by volume of the modified high density polyethylene to 100 parts by volume of the ethylene vinyl alcohol copolymer, and the first and second welding layers of the generally cylindrical configuration formed on the inner and outer peripheral surfaces of the barrier layer and made of high density polyethylene. Further, the portion for welding to the resin fuel tank is in the form of the increased diameter portion and also in the form of the thick-walled portion. Thus, the fuel hose is directly weldable to the polyethylene layer on the surface of the outer periphery of the opening of the resin fuel tank, and is excellent in welding strength and in fuel barrier properties. Additionally, the resin hose eliminates the need for the use of a joint. Thus, there is no connection between the joint and the hose. As a result, this reduces the number of parts including an O-ring, and improves sealing performance, pull-out strength, and the like.

In the method of producing a fuel hose for a resin fuel tank according to the present invention, the die surface facing the molding space defined by the predetermined upper and lower dies is formed with the increased diameter portion, and the upper and lower dies are adapted to circulate at a reduced speed when the hose base body is extruded from the extruder to the increased diameter portion of the die surface, to thereby configure the hose base body at a portion extruded into the increased diameter portion in the form of the increased diameter portion and in the form of the thick-walled portion. Therefore, the method can easily produce the fuel hose for the resin fuel tank according to the present invention.

The "upper and lower dies" according to the present invention are not intended to limit the direction in which the dies are arranged to a generally vertical direction, but mean a pair of opposed dies. For example, the "upper and lower dies" are meant to include a pair of dies arranged in a generally horizontal direction (i.e., a left-hand die and a right-hand die).

In particular, when the increased diameter portion is cut by a high-pressure jet of water, the method can prevent the generation of heat during the cutting to prevent the alteration such as oxidation of the cut surface. This prevents decrease in welding strength and in fuel barrier properties at the welded portion of the fuel hose for the resin fuel tank welded to the resin fuel tank.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a sectional view schematically showing a fuel hose according to a preferred embodiment of the present invention;
Fig. 2 is a sectional view schematically showing the fuel hose of Fig. 1 as welded to a fuel tank; and
Fig. 3 is a view schematically showing a method of producing the fuel hose of Fig. 1.

### DESCRIPTION OF THE PREFERRED EMBODIMENTS

A preferred embodiment according to the present invention will now be described in detail with reference to the drawings.

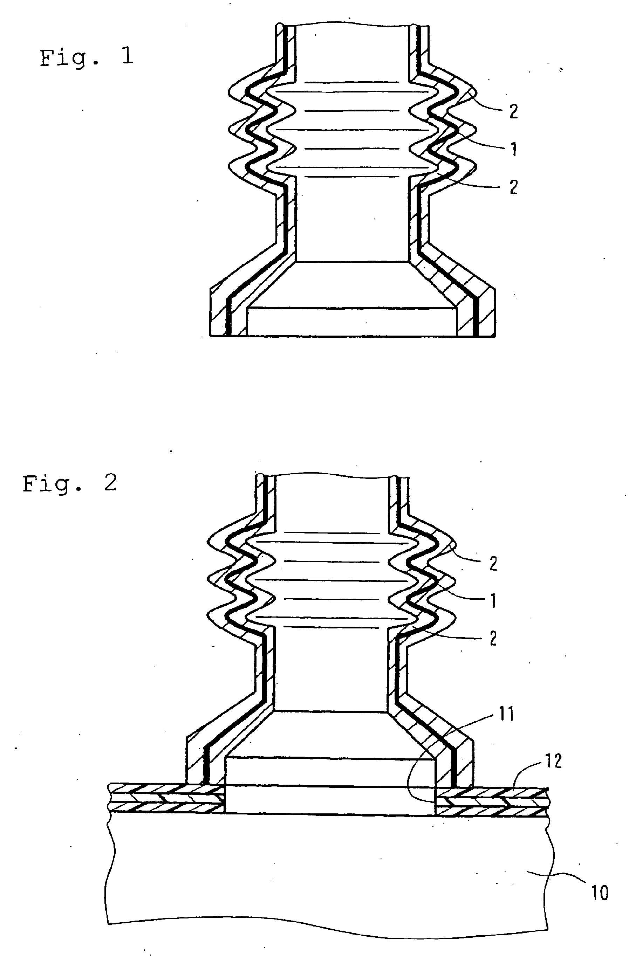

Fig. 1 shows a fuel hose for a resin fuel tank according to a preferred embodiment of the present invention. The fuel hose for the resin fuel tank (simply referred to hereinafter as a "fuel hose") according to the preferred embodiment has a triple layer structure of a generally cylindrical configuration and consisting of three coaxially laminated layers: a barrier layer 1 and a pair of (first and second) welding layers 2 formed on the inner and outer peripheral surfaces of the barrier layer 1. The layers 1 and 2 are made of materials to be described below in detail. An opening portion of the fuel hose at one end (in Fig. 1, a lower opening portion) is configured in the form of an increased diameter portion and also in the form of a thick-walled portion. Each of the barrier layer 1 and the welding layers 2 has a relatively heavy wall thickness in the thick-walled portion (or the increased diameter portion) of the fuel hose. The opening portion of the fuel hose which is configured in the form of the increased diameter portion and also in the form of the thick-walled portion is adapted for welding to a high density polyethylene (HDPE) layer 12 on the surface of an outer periphery of a mouth 11 of a resin fuel tank (simply referred to hereinafter as a "fuel tank") 10 to be described later in detail, as shown in Fig. 2.

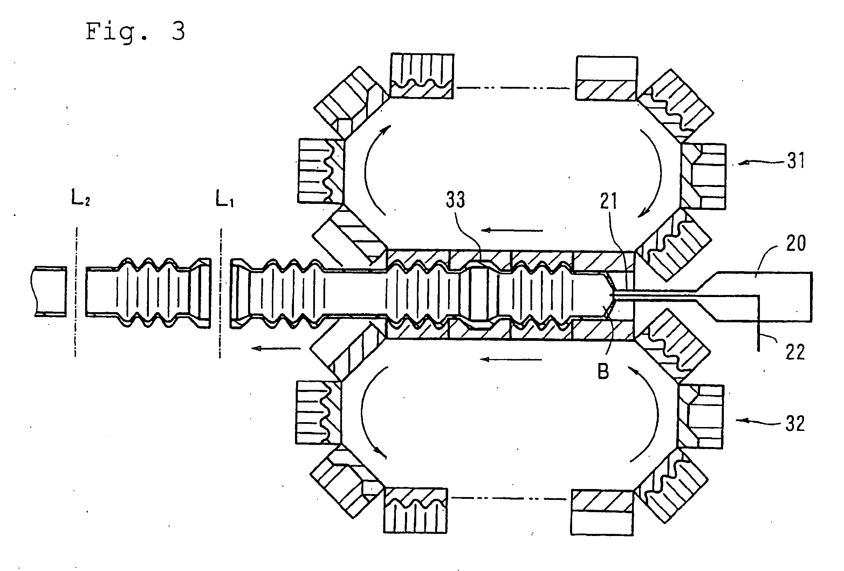

The fuel hose as mentioned above may be produced by using a molding machine such as a corrugator, as shown in Fig. 3. An example of the molding or extrusion machine for use in this preferred embodiment is a machine including an extruder 20 and a die assembly to be described below.

The extruder 20 includes an extrusion head 21 at the tip, and is capable of continuously extruding a hose base body B (from which a fuel hose is formed in a later step) of a generally cylindrical configuration having the above-mentioned triple layer structure from the extrusion head 21. The extruder 20 further includes an air supply pipe 22 in coaxial relation with the extrusion head 21. The air supply pipe 22 feeds air into a hollow portion of the extruded hose base body B of the generally cylindrical configuration. The triple layer structure of the hose base body B is not shown in Fig. 3.

The die assembly includes a set of upper dies 31 (referred to hereinafter as an upper die set 31) coupled to each other in the form of an endless loop and a set of lower dies 32 (referred to hereinafter as a lower die set 32) coupled to each other in the form of an endless loop. The upper dies in the upper die set 31 and the lower dies in the lower die set 32 are arranged in pairs to define a molding space of a generally cylindrical configuration. The upper die set 31 and the lower die set 32 circulate to sequentially bring each pair of upper and lower dies together near the extrusion head 21 of the extruder 20, thereby defining the above-mentioned molding space. A die surface (of the upper and lower dies held together) facing the molding space in this preferred embodiment is such that a corrugated bellows portion, a straight portion, and an increased diameter portion 33 are formed in respectively predetermined positions. After a pair of upper and lower dies are brought together, the pair of upper and lower dies move linearly away from the extrusion head 21 of the extruder 20 while being held together, and then are separated from each other. The die surface (of the upper and lower dies held together) facing the molding space is formed with amultiplicity of fine slits extending to the rear surfaces of the upper and lower dies. A vacuum is attained by exhausting air through the slits to thereby bring the hose base body B extruded to the die surface into intimate contact with the die surface under vacuum suction.

The above-mentioned machine is used to produce the fuel hose in a manner to be described below. While the upper die set 31 and the lower die set 32 are circulated in the directions shown by arrows in Fig. 3, respectively, the hose base body B having the triple layer structure is continuously extruded from the extrusion head 21 of the extruder 20. The extrusion output of the hose base body B is constant per unit time. Under such conditions, air is fed from the air supply pipe 22 of the extruder 20 into the hollow portion of the hose base body B, and a vacuum is attained in the upper and lower dies brought together, to thereby bring the hose base body B into intimate contact with the die surface facing the molding space. The circulating speed of the upper die set 31 and the lower die set 32 (i.e., the speed of movement of the upper and lower dies) is decreased when the hose base body B is extruded to the increased diameter portion 33 of the die surface facing the molding space of the die assembly. This provides the hose base body B in greater amounts to the increased diameter portion 33 than to other portions to make a portion of the hose base body B corresponding to the increased diameter portion 33 relatively thick-walled. Thereafter, the upper and lower dies are separated from each other, and the thus molded hose is removed from the die assembly at the same time. The hose removed from the die assembly has a configuration complementary to the die surface facing the molding space, and accordingly has corrugated bellows portions, straight portions, and increased diameter portions (or thick-walled portions) formed in respectively predetermined positions. As shown in Fig. 3, the positions of the corrugated bellows portions, straight portions and increased diameter portions in the molded hose are such that the hose includes continuing plurality of fuel hoses each having a diameter-increased end opening portion, a corrugated bellows portion and a straight end opening portion, which continue to adjacent fuel hoses in a manner of coupling diameter-increased end opening portions or straight end opening portions. The molded hose is cut circumferentially at an axially middle position of each of the increased diameter portions and the straight portions, as indicated by a dash-dot line L₁ and a dash-dot line L₂, respectively. Thus, fuel hoses as discussed above are produced in succession.

In the above production method, the molded hose is cut simultaneously at plurality of straight portions (as indicated by the dash-dot line L₂) to form plurality pairs of two fuel hoses continuing through diameter-increased end opening portions. Next, a filler material is inserted into the hollow portion of each pair of fuel hoses to properly maintain the configuration thereof. Then, each pair of fuel hoses is cut at the increased diameter portion (as indicated by the dash-dot line L₁), and the filler material is removed. Cutting in this manner is preferable in terms of improvements in cutting accuracy at the increased diameter portion.

Preferably, a high-pressure water jetting at an increased hydraulic pressure is preferably used to cut the molded hose. This is because the use of such a high-pressure water jetting prevents the generation of heat during the cutting to prevent the alteration such as oxidation of the cut surface, thereby avoiding the decrease in welding strength of welds of the fuel hose and the fuel tank 10 and in fuel barrier properties. An example of a machine for such cutting includes WATER JET CUTTER Rb (manufactured by Sugino Machine Limited). The hydraulic pressure of the high-pressure water jetting during the cutting is set within the range of 200 MPa to 400 MPa.

The fuel hose produced in this manner will be described in further detail. The peripheral wall thickness of the thick-walled portion (or the increased diameter portion) of the fuel hose is set within the range of 3 to 20 mm, and the peripheral wall thickness of the corrugated bellows portion and the straight portion of the fuel hose is set to about 10 to about 30% of the peripheral wall thickness of the thick-walled portion. The thickness of the barrier layer 1 in the thick-walled portion (or the increased diameter portion) of the fuel hose is set within the range of 300 to 2000 µm, and the thickness of the barrier layer 1 in the corrugated bellows portion and the straight portion is set to about 10 to about 30% of the thickness in the thick-walled portion. The thickness of each of the welding layers 2 in the thick-walled portion (or the increased diameter portion) of the fuel hose is set within the range of 1.3 to 9.0 mm, and the thickness of each of the welding layers 2 in the corrugated bellows portion and the straight portion is set to about 10 to about 30% of the thickness in the thick-walled portion. The outside diameter of the thick-walled portion (or the increased diameter portion) of the fuel hose is set within the range of 10 to 80 mm, and the outside diameter of the corrugated bellows portion and the straight portion of the fuel hose is set to about 40 to about 95% of the outside diameter of the thick-walled portion.

In the triple layer structure of the fuel hose, the barrier layer 1 is made of an alloy material consisting primarily of EVOH and modified HDPE. Preferably, an alloy material such that EVOH serves as a matrix and modified HDPE serves as a domain (or an alloy material having a sea-island structure such that a fine island phase made of modified HDPE is dispersed in a sea phase made of EVOH) is used herein because of its excellent low fuel permeability (or excellent fuel barrier properties) and its good welding strength (or adhesion) to the HDPE layer 12 which is the outermost layer of the fuel tank 10. The term "consisting primarily of" as used herein means that the constituent makes up at least 50% of all material, and is to be interpreted as including meaning that the material consists only of the constituent.

The EVOH used herein is not particularly limited, but preferably has an ethylene copolymer ratio ranging from 25 to 45 mole percent, more preferably ranging from 30 to 40 mole percent, in terms of moldability during the formation of the alloy material and the fuel barrier properties. Also, the EVOH used herein preferably has a melting point ranging from 160 °C to 192 °C , more preferably ranging from 165°C to 185°C.

The modified HDPE used herein consists primarily of at least one or more than one functional group selected from the group consisting of a maleic anhydride residue, a maleic acid group, an acrylic acid group, a methacrylic acid group, an acrylic acid ester group, a methacrylic acid ester group, a vinyl acetate group and an amino group. The modified HDPE used herein is not particular limited, but may be obtained by, for example, graft modifying at least one of an unsaturated carboxylic acid and an unsaturated carboxylic acid derivative, or a modifying compound such as an amine-containing compound (methylenediamine and the like) onto HDPE in the presence of a radical initiator. The modified HDPE used herein preferably has a melting point (in accordance with ISO 3146) ranging from 100°C to 145°C, more preferably ranging from 110°C to 135°C. In general, HDPE (high density polyethylene) in the modified HDPE refers to HDPE having a specific gravity (ISO 1183) ranging from 0.93 to 0.97, preferably ranging from 0.93 to 0.96, and a melting point (ISO 3146) ranging from 120°C to 145°C.

The modified HDPE is mixed with the EVOH in a ratio of 150 to 900 parts by volume of the modified HDPE to 100 parts by volume of the EVOH. This is because the weldability to the fuel tank 10 tends to decrease when the ratio of the modified HDPE is less than 150 parts by volume, while the fuel barrier properties tend to decrease when the ratio of the modified HDPE is greater than 900 parts by volume. Preferably, the modification ratio of the modified HDPE is set within the range of 0.1 to 5.0% by weight. This is because the affinity of the EVOH and the modified HDPE for each other decreases and the fuel barrier properties tend to decrease when the modification ratio is less than 0.1% by weight, while the fuel barrier properties tend to decrease and working environments for kneading, extrusion and the like deteriorate when the modification ratio is greater than 5.0% by weight.

The above-mentioned alloy material is obtained by kneading the EVOH and the modified HDPE together. In particular, when the kneading is performed under high shear condition, the alloy material having the above-mentioned sea-island structure formed therein is obtained. The kneading under high shear condition is accomplished by using, for example, a twin-screw extruder (or kneader) and the like. The above-mentioned kneading is considered to cause the hydroxyl group of the EVOH and the modified group of the modified HDPE to form a hydrogen bond or a covalent bond. As a result, the affinity of the EVOH and the modified HDPE for each other increases, and the alloy material exhibits the sea-island structure with the fine island phase dispersed. Thus, fuel permeation of the barrier layer 1 is considered to be restrained, thereby providing the barrier layer with an excellent low fuel permeability (or excellent fuel barrier properties).

The material of the welding layers 2 in the triple layer structure of the fuel hose is HDPE. Since the alloy material of the barrier layer 1 contains similar HDPE, the barrier layer 1 and the welding layers 2 have good conformability and increased adhesion therebetween. This avoids the removal of the layers from each other at each interface, and also avoids leakage of fuel at each interface.

Since the alloy material of the barrier layer 1 contains EVOH, the alloy material of the barrier layer 1 is liable to absorb moisture, thereby giving rise to apprehension about the decrease in adhesion due to the moisture absorption. However, the fuel hose includes the water impervious welding layers 2 (made of HDPE) formed on the surfaces of the barrier layer 1 (made of the alloy material). This prevents moisture absorption during storage prior to welding, and gives rise to no apprehension about the decrease in adhesion due to moisture absorption.

In general, the fuel tank 10 has a multi-layer structure incorporating a low fuel permeability layer made of a low fuel permeability material such as EVOH in consideration of the prevention of fuel evaporation. The outermost layer of the multi-layer structure employs HDPE and the like as the material thereof because of its impact resistance, chemical resistance, water resistance, economy and the like. The fuel tank 10 is shown in Fig. 2 as having a five-layer structure consisting of the HDPE layer 12, an adhesive layer (not shown), an EVOH layer, an adhesive layer (not shown), and an HDPE layer from outside to inside in the order named.

A method of welding the fuel hose to the surface of the outer periphery of the mouth 11 of the resin fuel tank 10 is not particularly limited. Hot plate welding, vibration welding, ultrasonic welding, laser welding and the like are preferable as the welding method in terms of providing a high bonding strength. However, hot-gas welding and spin welding may be used as the welding method.

The above-mentioned welding melts abutment surface portions of the opening portion of the fuel hose at one end and the HDPE layer 12 serving as the outermost layer of the fuel tank 10 to weld the abutment surface portions together. The barrier layer 1 (made of the alloy material consisting primarily of EVOH and modified HDPE) of the fuel hose and the outermost layer (or the HDPE layer 12) of the fuel tank 10 have good conformability at an interface between the layers 1 and 12 during the welding because both the layers 1 and 12 contain polyethylene. This improves adhesion between the layers 1 and 12 to prevent the removal of the layers 1 and 12 from each other at the interface therebetween. Thus, not only the high barrier properties of the barrier layer 1 itself but also high barrier properties at the welds of the layers 1 and 12 are attained. Additionally, since both the welding layers 2 (HDPE) of the fuel hose and the outermost layer (or the HDPE layer 12) of the fuel tank 10 are made of HDPE, the above-mentioned welding provides not only good conformability at the interface between the layers 2 and 12 but also similar expansion coefficients thereof to increase the adhesion between the layers 2 and 12 and to increase adhesion stability.

The weld of the fuel hose to the fuel tank 10 is in the form of the increased diameter portion and also in the form of the thick-walled portion. This makes the barrier layer 1 thick-walled to improve fuel barrier properties, and also increases the welding area of the welding layers 2 and the fuel tank 10 to improve the welding strength of the fuel hose to the fuel tank 10.

Further, the fuel hose having the above-mentioned triple layer structure (or a sandwich structure) has a structure such that the relatively flexible and impact-resistant HDPE (or the welding layers 2) protects the barrier layer 1. Thus, the fuel hose is excellent in flexibility and has impact resistance.

The fuel hose according to the preferred embodiment as discussed above has the triple layer structure consisting of the first welding layer 2, the barrier layer 1 and the second welding layer 2. The structure of the fuel hose, however, is not limited to this. The fuel hose may have a five-layer structure consisting of the welding layer 2, the barrier layer 1, the welding layer 2, the barrier layer 1 and the welding layer 2, or may have a multi-layer structure consisting of greater than five layers. This increases the number of welding layers 2 to increase the reliability of the welding.

The fuel hose according to the preferred embodiment as discussed above is illustrated as formed with the corrugated bellows portion. The configuration of the fuel hose, however, is not limited to this. The fuel hose need not be formed with the corrugated bellows portion.

Next, an example will be described. The present invention, however, is not limited to the example to be described below.

### EXAMPLE

### [EVOH (Material of Barrier Layer)]

EVOH (EVAL F101A, manufactured by Kuraray Co., Ltd.) was prepared.

### [Modified HDPE (Material of Barrier Layer)]

Modified HDPE was prepared by mixing 0.4% by weight of a maleic anhydride and 0.015% by weight of 2,5-dimethyl-2,5di(t-butylperoxy)hexane with HDPE (NOVATEC HY430, manufactured by Japan Polyethylene Corporation) and then melting and kneading the mixture by using a twin-screw kneading extruder.

### [Alloy Material (Material of Barrier Layer)]

A pellet made of the alloy material was prepared by mixing the above-mentioned materials, that is, EVOH and modified HDPE in a ratio of 10:90 and then melting and kneading the mixture by using a twin-screw kneading extruder.

### [HDPE (Material of Welding Layers)]

HDPE (HB122R, manufactured by Japan Polyethylene Corporation) was prepared.

### [Fuel Hose Manufacturing Machine]

A five-layer manufacturing machine manufactured by Pla Giken Co., Ltd. was prepared.

### [Production of Fuel Hose]

Using the above-mentioned materials and manufacturing machine, the fuel hose was produced which had a five-layer structure consisting of a welding layer, a barrier layer, a welding layer, a barrier layer and a welding layer, and which had a middle portion in the form of the corrugated bellows portion and opposite end portions in the form of the straight portion, one of the end portions being in the form of the increased diameter portion (thick-walled portion), in a manner as described above concerning the preferred embodiment. During the production, the speed of movement of the upper and lower dies was set at 4 meters per minute when the hose base body was extruded to form the corrugated bellows portion and the straight portion, and was set at 0.5 meter per minute when the hose base body was extruded to form the increased diameter portion. During the molding of the hose base body, air was fed from the air supply pipe into the hollow portion of the hose base body, and a vacuum was attained by exhausting air through the slits in the upper and lower dies, to thereby bring the hose base body into intimate contact with the die surface under vacuum suction. The pressure of the fed air was set at 0.05 MPa (gauge pressure) when the hose base body was molded to form the corrugated bellows portion and the straight portion, and was set at 0.2 MPa (gauge pressure) when the hose base body was molded to form the increased diameter portion. The outside diameters of the produced fuel hose were as follows: 30 mm in the straight portion, 35 mm in the corrugated bellows portion, and 45 mm in the increased diameter portion. The thicknesses of each barrier layer were as follows: 70 µm in the corrugated bellows portion, 150 µm in the straight portion, and 600 µm in the increased diameter portion. The thicknesses of each welding layer were as follows: 200 µm in the corrugated bellows portion, 400 µm in the straight portion, and 1600 µm in the increased diameter portion. The outer diameters were measured by using a vernier caliper, and the thicknesses of the layers were measured by viewing the cross-sections of the corrugated bellows portion and the straight portion and the opening surface of the increased diameter portion under a microscope (VH-8000, manufactured by Keyence Corporation).

### [Interlayer Adhesion]

The above-mentioned fuel hose was cut into strips each having a width of 10 mm. The strips were gripped by chucks of a tensile testing machine (manufactured by Orientec Co., Ltd.), and extensional strain up to 200% was applied to the strips under conditions of a pulling speed of 50 mm per minute. As a result, no removal occurred at an interface between the layers.

### [Weldability to Tank]

An HDPE sheet material (having a thickness of 8 mm) corresponding to the outermost layer of the fuel tank was prepared, and an opening having a diameter equal to the inside diameter of the increased diameter portion of the fuel hose was formed in the sheet material. A hot plate at 240°C was put on the surface of an outer periphery of the opening for 30 seconds to heat and melt that portion. Immediately after the hot plate was removed, the increased diameter portion of the fuel hose was welded to the melted portion. After sufficient cooling at room temperature (at 25°C), the fuel hose with the sheet material welded thereto was cut into strips each having a width of 10 mm. The tip of the sheet material and the tip of the fuel hose portion of each strip were gripped by chucks of a tensile testing machine (manufactured by Orientec Co., Ltd.), and a tensile test was conducted under conditions of a pulling speed of 50 mm per second. As a result, all tensile tests showed no removal at an interface between the sheet material and the fuel tank, but breakage in either (base material) of the sheet material or the fuel tank.

The above-mentioned result shows that the fuel hose according to the preferred embodiment gives rise to no apprehension about the removal of the layers of the fuel hose from each other and has a strong welding strength to the fuel tank.

While the invention has been described in detail, the foregoing description is in all aspects illustrative and not restrictive. It is understood that numerous other modifications and variations can be devised without departing from the scope of the invention.

## Claims

1. A fuel hose for a resin fuel tank, comprising:
a barrier layer of a generally cylindrical configuration, said barrier layer being made of an alloy material consisting primarily of ethylene vinyl alcohol copolymer and high density polyethylene (HDPE) modified with at least one or more than one functional group selected from the group consisting of a maleic anhydride residue, a maleic acid group, an acrylic acid group, a methacrylic acid group, an acrylic acid ester group, a methacrylic acid ester group, a vinyl acetate group and an amino group, the modified high density polyethylene being mixed with the ethylene vinyl alcohol copolymer in a ratio of 150 to 900 parts by volume of the modified high density polyethylene to 100 parts by volume of the ethylene vinyl alcohol copolymer;
a first welding layer of a generally cylindrical configuration formed on an inner peripheral surface of said barrier layer; and
a second welding layer of a generally cylindrical configuration formed on an outer peripheral surface of said barrier layer,
said first and second welding layers being made of high density polyethylene,
said barrier layer, said first welding layer and said second welding layer constituting a triple layer structure of a generally cylindrical configuration, said triple layer structure having an opening portion at one end thereof, said opening portion being configured in the form of an increased diameter portion and also in the form of a thick-walled portion, said opening portion being formed as a portion for welding to a polyethylene layer on the surface of an outer periphery of an opening of the resin fuel tank.

2. The fuel hose according to claim 1, wherein the modification ratio of the modified HDPE is set within the range of 0.1 to 5.0% by weight.

3. A method of producing a fuel hose for a resin fuel tank, said method comprising the steps of:
while circulating an upper die set including a plurality of upper dies coupled to each other in the form of an endless loop and a lower die set including a plurality of lower dies coupled to each other in the form of an endless loop, sequentially bringing the upper and lower dies in pairs together to form a generally cylindrical molding space;
extruding a hose base body of a generally cylindrical configuration made of a material for production of the fuel hose from an extruder into the molding space to bring the hose base body into intimate contact with a die surface facing the molding space, thereby making the hose base body in the form of a continuous hose; and
sequentially separating the upper and lower dies in pairs from each other to remove the continuous hose from the upper and lower dies,
the die surface facing the molding space defined by a predetermined pair of upper and lower dies in the upper and lower die sets being formed with an increased diameter portion,
the hose base body having a triple layer structure including a barrier layer base material of a generally cylindrical configuration, a first welding layer base material of a generally cylindrical configuration formed on an inner peripheral surface of said barrier layer base material, and a second welding layer base material of a generally cylindrical configuration formed on an outer peripheral surface of said barrier layer base material, said barrier layer base material being made of an alloy material consisting primarily of ethylene vinyl alcohol copolymer and high density polyethylene modified with at least one or more than one functional group selected from the group consisting of a maleic anhydride residue, a maleic acid group, an acrylic acid roup, a methacrylic acid group, an acrylic acid ester group, a methacrylic acid ester group, a vinyl acetate group and an amino group, the modified high density polyethylene being mixed with the ethylene vinyl alcohol copolymer in a ratio of 150 to 900 parts by volume of the modified high density polyethylene to 100 parts by volume of the ethylene vinyl alcohol copolymer, said first and second welding layer base materials being made of high density polyethylene,
the upper die set and the lower die set being adapted to circulate at a reduced speed when said hose base body is extruded from the extruder to the increased diameter portion of the die surface, to thereby configure the hose base body at a portion extruded into the increased diameter portion in the form of an increased diameter portion and in the form of a thick-walled portion,
said method further comprising the step of
cutting said increased diameter portion of the continuous hose in a circumferential direction after the continuous hose is removed.

4. The method according to claim 3, wherein the modification ratio of the modified HDPE is set within the range of 0.1 to 5.0% by weight.

## Patentansprüche

1. Kraftstoffschlauch für einen Harz-Kraftstofftank, aufweisend:
eine Sperrschicht einer im Allgemeinen zylindrischen Konfiguration, wobei die Sperrschicht aus einem Legierungsmaterial hergestellt ist, das vorwiegend aus einem Ethylenvinylalkohol-Copolymer und einem Polyethylen hoher Dichte (HDPE) besteht, das mit zumindest einer oder mehreren funktionellen Gruppen modifiziert ist, die aus der Gruppe bestehend aus einem Maleinsäureanhydridrest, einer Maleinsäuregruppe, einer Acrylsäuregruppe, einer Methacrylsäuregruppe, einer Acrylsäureestergruppe, einer Methacrylsäureestergruppe, einer Vinylacetatgruppe und einer Aminogruppe ausgewählt werden, wobei das modifizierte Polyethylen hoher Dichte mit dem Ethylenvinylalkohol-Copolymer in einem Verhältnis von 150 zu 900 Volumenanteilen des modifizierten Polyethylens hoher Dichte zu 100 Volumenanteilen des Ethylenvinylalkohol-Copolymers gemischt wird;
eine erste Schweißschicht einer im Allgemeinen zylindrischen Konfiguration, die auf einer inneren Umfangsoberfläche der Sperrschicht ausgebildet ist; und
eine zweite Schweißschicht einer im Allgemeinen zylindrischen Konfiguration, die auf einer äußeren Umfangsoberfläche der Sperrschicht ausgebildet ist,
wobei die erste und die zweite Schweißschicht aus einem Polyethylen hoher Dichte hergestellt sind,
wobei die Sperrschicht, die erste Schweißschicht und die zweite Schweißschicht eine Dreifachschichtstruktur einer im Allgemeinen zylindrischen Konfiguration darstellen, wobei die Dreifachschichtstruktur einen Öffnungsbereich an einem Ende derselben aufweist, wobei der Öffnungsbereich in der Form eines vergrößerten Durchmesserbereichs und zudem in Form eines dickwandigen Bereichs konfiguriert ist, wobei der Öffnungsbereich als ein Bereich zum Verschweißen mit einer Polyethylenschicht auf der Oberfläche eines äußeren Umfangs einer Öffnung des Harz-Kraftstofftanks konfiguriert ist.

2. Kraftstoffschlauch nach Anspruch 1, wobei das Modifikationsverhältnis des modifizierten HDPE auf einen Bereich von 0,1 bis 5,0 Gewichtsprozent eingestellt ist.

3. Verfahren zum Herstellen eines Kraftstoffschlauchs für einen Harz-Kraftstofftank, wobei das Verfahren folgende Schritte beinhaltet:
während ein oberer Formwerkzeugssatz, der eine Mehrzahl von oberen Formwerkzeugen beinhaltet, die in Form einer Endlosschleife aneinander gekoppelt sind, und ein unterer Formwerkzeugsatz, der eine Mehrzahl von unteren Formwerkzeugen beinhaltet, die in Form einer Endlosschleife aneinander gekoppelt sind, zirkuliert werden, aufeinanderfolgendes paarweises Zusammenführen der oberen und unteren Formwerkzeuge, um einen im Allgemeinen zylindrischen Formraum zu bilden;
Extrudieren eines Schlauchbasiskörpers einer im Allgemeinen zylindrischen Konfiguration, der aus einem Material zur Herstellung des Kraftstoffschlauchs besteht, aus einem Extruder in den Formraum, um den Schlauchbasiskörper in engen Kontakt mit der Formwerkzeugsoberfläche zu bringen, die dem Formraum gegenüberliegt, wodurch dem Schlauchbasiskörper die Form eines durchgehenden Schlauchs verliehen wird; und
aufeinanderfolgendes paarweises Trennen der oberen und unteren Formwerkzeuge voneinander, um den durchgehenden Schlauch aus den oberen und unteren Formwerkzeugen zu entfernen,
wobei die Formwerkzeugoberfläche, die dem Formraum gegenüberliegt, der durch ein vorbestimmtes Paar von oberen und unteren Formwerkzeugen in den oberen und unteren Formwerkzeugsätzen definiert ist, mit einem vergrößerten Durchmesserbereich ausgebildet ist,
wobei der Schlauchbasiskörper eine Dreifachschichtstruktur aufweist, die ein Sperrschicht-Basismaterial aus einer im Allgemeinen zylindrischen Konfiguration, ein erstes Schweißschicht-Basismaterial einer im Allgemeinen zylindrischen Konfiguration, die auf einer inneren Umfangsoberfläche des Sperrschicht-Basismaterials ausgebildet ist, und ein zweites Schweißschicht-Basismaterial einer im Allgemeinen zylindrischen Konfiguration, die auf einer äußeren Umfangsoberfläche des Sperrschicht-Basismaterials ausgebildet ist, beinhaltet, wobei das Sperrschicht-Basismaterial aus einem Legierungsmaterial hergestellt ist, das vorwiegend aus einem Ethylenvinylalkohol-Copolymer und
einem Polyethylen hoher Dichte besteht, das mit zumindest einer oder mehr als einer funktionellen Gruppe modifiziert ist, die die aus der Gruppe bestehend aus einem Maleinsäureanhydridrest, einer Maleinsäuregruppe, einer Acrylsäuregruppe, einer Methacrylsäuregruppe, einer Acrylsäureestergruppe,
einer Methacrylsäureestergruppe, einer Vinylacetatgruppe und einer Aminogruppe ausgewählt wird, wobei das modifizierte Polyethylen hoher Dichte mit dem Ethylenvinylalkohol-Copolymer in einem Verhältnis von 150 zu 900 Volumenanteilen des modifizierten Polyethylens hoher Dichte zu 100 Volumenanteilen des Ethylenvinylalkohol-Copolymers gemischt wird, wobei die Basismaterialien der ersten und der zweiten Schweißschicht aus einem Polyethylen hoher Dichte hergestellt werden,
wobei der obere Formwerkzeugsatz und der untere Formwerkzeugsatz in der Lage sind, mit einer reduzierten Geschwindigkeit zu zirkulieren, wenn der Schlauchbasiskörper aus dem Extruder auf den vergrößerten Durchmesserbereich der Formwerkzeugoberfläche extrudiert wird, so dass **dadurch** der Schlauchbasiskörper an einem Bereich konfiguriert wird, der in den vergrößerten Durchmesserbereich in der Form eines vergrößerten Durchmesserbereichs und in der Form eines dickwandigen Bereichs extrudiert wird,
wobei das Verfahren ferner den Schritt des
Zuschneidens des vergrößerten Durchmesserbereichs des durchgehenden Schlauchs in einer Umfangsrichtung beinhaltet, nachdem der durchgehende Schlauch entfernt worden ist.

4. Verfahren nach Anspruch 3, wobei das Modifikationsverhältnis des modifizierten HDPE innerhalb eines Bereichs von 0,1 bis 5,0 Gewichtsprozent eingestellt wird.

## Revendications

1. Tuyau de combustible pour réservoir de combustible en résine, comprenant :
une couche barrière de configuration généralement cylindrique, ladite couche barrière étant composée d'un matériau d'alliage constitué principalement d'un copolymère d'éthylène-alcool vinylique et d'un polyéthylène haute densité (HDPE) modifié avec au moins un ou plus d'un groupe fonctionnel choisi dans le groupe constitué par un résidu d'anhydride maléique, un groupe acide maléique, un groupe acide acrylique, un groupe acide méthacrylique, un groupe ester d'acide acrylique, un groupe ester d'acide méthacrylique, un groupe acétate de vinyle et un groupe amino, le polyéthylène haute densité modifié étant mélangé avec le copolymère d'éthylène-alcool vinylique à un rapport de 150 parties de 900 parties en volume du polyéthylène haute densité modifié pour 100 parties en volume du copolymère d'éthylène-alcool vinylique ;
une première couche de soudage de configuration généralement cylindrique, formée sur une surface périphérique interne de ladite couche barrière ; et
une seconde couche de soudage de configuration généralement cylindrique, formée sur une surface périphérique externe de ladite couche barrière,
ladite première couche de soudage et ladite seconde couche de soudage étant composées d'un polyéthylène haute densité,
ladite couche barrière, ladite première couche de soudage et ladite seconde couche de soudage constituant une structure à trois couches de configuration généralement cylindrique, ladite structure à trois couches possédant une partie ouverture à l'une de ses extrémités, ladite partie ouverture étant configurée sous la forme d'une partie à plus grand diamètre et également sous la forme d'une partie à paroi épaisse, ladite partie ouverture étant formée sous la forme d'une partie destinée à être soudée sur une couche de polyéthylène sur la surface d'une périphérie externe d'une ouverture du réservoir de combustible en résine.

2. Tuyau de combustible selon la revendication 1, dans lequel le taux de modification du HDPE modifié est situé dans la plage allant de 0,1 % en poids à 5,0 % en poids.

3. Procédé de production d'un tuyau de combustible pour réservoir de combustible en résine, ledit procédé comprenant les étapes suivantes :
tout en faisant circuler un ensemble de matrice supérieure comprenant une pluralité de matrices supérieures couplées les unes aux autres sous la forme d'une boucle sans fin et un ensemble de matrice inférieure comprenant une pluralité de matrices inférieures couplées les unes aux autres sous la forme d'une boucle sans fin, la mise en contact de manière séquentielle des matrices supérieures et des matrices inférieures par paire pour former un espace de moulage généralement cylindrique ;
l'extrusion d'un corps de base de tuyau de configuration généralement cylindrique composé d'un matériau permettant de produire le tuyau de combustible à partir d'une machine extrusion dans l'espace de moulage pour mettre en contact intime le corps de base de tuyau avec une surface de matrice orientée vers l'espace de moulage, pour que le corps de base de tuyau ait ainsi la forme d'un tuyau continu ; et
la séparation de manière séquentielle des matrices supérieures et des matrices inférieures par paire les unes des autres pour retirer le tuyau continu des matrices supérieures et des matrices inférieures,
la surface de matrice orientée vers l'espace de moulage défini par une paire prédéterminée de matrice supérieure et de matrice inférieure dans les ensembles de matrice supérieure et inférieure étant formée avec une partie à plus grand diamètre,
le corps de base de tuyau possédant une structure à trois couches comprenant un matériau de base pour couche barrière de configuration généralement cylindrique, un premier matériau de base pour couche de soudage de configuration généralement cylindrique formé sur une surface périphérique interne dudit matériau de base pour couche barrière, et un second matériau de base pour couche de soudage de configuration généralement cylindrique formé sur une surface périphérique externe dudit matériau de base pour couche barrière, ledit matériau de base pour couche barrière étant composé d'un matériau d'alliage constitué principalement d'un copolymère d'éthylène-alcool vinylique et d'un polyéthylène haute densité modifié avec au moins un ou plus d'un groupe fonctionnel choisi dans le groupe constitué par un résidu d'anhydride maléique, un groupe acide maléique, un groupe acide acrylique, un groupe acide méthacrylique, un groupe ester d'acide acrylique, un groupe ester d'acide méthacrylique, un groupe acétate de vinyle et un groupe amino, le polyéthylène haute densité modifié étant mélangé avec le copolymère d'éthylène-alcool vinylique à un rapport de 150 parties de 900 parties en volume du polyéthylène haute densité modifié pour 100 parties en volume du copolymère d'éthylène-alcool vinylique, ledit premier matériau de base pour couche de soudage et ledit second matériau de base pour couche de soudage étant composés d'un polyéthylène haute densité,
l'ensemble de matrice supérieure et l'ensemble de matrice inférieure étant capable de circuler à une vitesse réduite quand ledit corps de base de tuyau est extrudé à partir de la machine d'extrusion vers la partie à plus grand diamètre de la surface de matrice, pour ainsi configurer le corps de base de tuyau au niveau d'une partie extrudée dans la partie à plus grand diamètre sous la forme d'une partie à plus grand diamètre et sous la forme d'une partie à paroi épaisse,
ledit procédé comprenant en outre l'étape suivants :
la découpe de ladite partie à plus grand diamètre du tuyau continu dans une direction circonférentielle après le retrait du tuyau continu.

4. Procédé selon la revendication 3, dans lequel le taux de modification du HDPE modifié est situé dans la plage allant de 0,1 % en poids à 5,0 % en poids.
